(19) Europäisches Patentamt
European Patent Office
Office européen des brevets

(11) Veröffentlichungsnummer : **0 335 237 B1**

# (12) EUROPÄISCHE PATENTSCHRIFT

(45) Veröffentlichungstag der Patentschrift : **23.09.92 Patentblatt 92/39**

(51) Int. Cl.$^5$ : **C09D 11/00**

(21) Anmeldenummer : **89105094.0**

(22) Anmeldetag : **22.03.89**

## (54) Tinten für Ink-Jet-Aufzeichnungsverfahren.

(30) Priorität : **31.03.88 DE 3810958**

(43) Veröffentlichungstag der Anmeldung : **04.10.89 Patentblatt 89/40**

(45) Bekanntmachung des Hinweises auf die Patenterteilung : **23.09.92 Patentblatt 92/39**

(84) Benannte Vertragsstaaten : **CH DE ES FR GB IT LI**

(56) Entgegenhaltungen :
**EP-B- 0 176 196**
**DE-A- 3 044 563**
**DE-A- 3 133 391**
**US-A- 4 425 162**

(73) Patentinhaber : **BASF Aktiengesellschaft**
**Carl-Bosch-Strasse 38**
**W-6700 Ludwigshafen (DE)**

(72) Erfinder : **Mayer, Udo, Dr.**
**Max-Slevogt-Strasse 27**
**W-6710 Frankenthal (DE)**
Erfinder : **Bruder, Horst, Dr.**
**Dubliner Strasse 25**
**W-6700 Ludwigshafen (DE)**
Erfinder : **Ruske, Manfred**
**Merziger Strasse 10**
**W-6700 Ludwigshafen (DE)**

EP 0 335 237 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Beim Ink-Jet-Aufzeichnungsverfahren werden Tröpfchen der Aufzeichnungsflüssigkeiten aus einer kleinen, an einem Schreibkopf vorhandenen Düse in Strahlform ausgestoßen und so ein Bild auf der Oberfläche eines Aufzeichnungsmaterials aufgezeichnet.

Schreibutensilien, z.B. Füllfederhalter oder Filzstifte, die zu Aufzeichnungen auf Aufzeichnungsmaterialien wie Papier und dergleichen benutzt werden, verwenden üblicherweise eine Tinte, die sich aus verschiedenen, in Wasser oder organischen Lösungsmitteln gelösten Farbstoffen zusammensetzen.

Es sind auch Tinten aus verschiedenen Farbstoffen und Wasser und/oder organischen Lösungsmitteln für die Anwendung in Tintenstrahlaufzeichnungssystemen (Ink-Jet-Systemen) bekannt, bei denen die Flüssigkeit innerhalb des Aufzeichnungskopfs von der Strahldüse unter dem Einfluß eines Piezo-Schwingers oder unter dem Einfluß elektrostatischer Anziehungskräfte bei angelegter hoher Spannung abgegeben wird. Im Vergleich zu Tinten für Schreibutensilien wie Füllfederhalter, Filzstifte und andere sind jedoch die Anforderungen an die Aufzeichnungsflüssigkeit für einen Tintenstrahlschreiber in vielerlei Hinsicht wesentlich höher.

Beim Ink-Jet-Verfahren erfolgt die Aufzeichnung durch Ausstoßen der Aufzeichnungsflüssigkeit/Tinte in Tröpfchen in Form eines Strahls, wobei die ausgestoßenen Tintentröpfchen an dem Aufzeichnungsempfangsmaterial haften bleiben.

Die Aufzeichnungsflüssigkeit (Tinte) setzt sich zusammen aus einem Aufzeichnungsmittel (Farbstoff) und einem flüssigen Medium, z.B. Wasser, verschiedene organische Lösungsmittel oder Mischungen davon, das das Aufzeichnungsmittel löst. Neben diesen Hauptkomponenten können die Tinten gegebenenfalls noch verschiedene Zusätze enthalten.

Bei den Ink-Jet-Aufzeichnungsverfahren gibt es zahlreiche Verfahren zur Erzeugung der Tröpfchen und der Steuerung des Strahls und seiner Richtung.

Bei einer Anordnung wird z.B. ein Aufzeichnungssignal einem Schreibkopf zugeführt, der einen Piezo-Schwinger enthält, wobei Tröpfchen der Tinte in Abhängigkeit vom zugeführten Signal erzeugt werden, um die Aufzeichnung zu bewirken. Das Aufzeichnungssignal wird durch eine Signalverarbeitungs einrichtung in einen Impuls umgesetzt und dem Piezo-Schwinger zugeführt. Eine durch den Impuls verursachte Änderung im Druck auf die Tinte innerhalb der Flüssigkeitskammer führt zum Ausstoß von Tintentröpfchen aus der Strahldüse. D.h. es wird ein Bild auf dem Aufzeichnungsmaterial mit Hilfe der Tröpfchen geschrieben.

Neben dieser Art der Anordnung gibt es zahlreiche weitere bekannte Aufzeichnungssysteme. So kann z.B. die Kammer für die Flüssigkeit (Tinte) Düsenform haben und von einem zylindrischen Piezo-Schwinger umgeben sein. Der Mechanismus der Tröpfchenerzeugung ist im wesentlichen der gleiche wie der vorstehend beschriebene. Es ist auch bekannt, elektrisch geladene Tröpfchen kontinuierlich zu erzeugen und durch geeignete elektrostatische Ablenkung nur einen Teil der Tröpfchen zur Aufzeichnung heranzuziehen. Weiterhin ist bekannt, Wärmeenergie entsprechend einem Aufzeichnungssignal einer in einer Kammer des Schreibkopfes befindlichen Tinte zuzuführen, um so Tröpfchen zu erzeugen.

Bei Zufuhr eines elektrischen Signals an die Elektroden eines Wärmeerzeugungskopfes wird rasch Wärme erzeugt und in der Tinte entsteht eine Blase. Der hierdurch entstehende Druck auf die Tinte wölbt den Meniskus der Tinte an der Düse nach außen und führt zum Ausstoß eines Tintentröpfchens aus der Strahldüse.

Weitergehende Informationen zum Stand der Technik sind dem Fachmann aus der Patentliteratur und der dort genannten Literatur bekannt. Stellvertretend seien genannt:
EP-A-224 909, EP-A-121 993, EP-A-176 196, DE-A-25 43 092, DE-A-34 33 508 und EP-A-159 291.

Eine Übersicht über die Patent- und Zeitschriftenliteratur auf diesem Gebiet enthält die Veröffentlichung "Tinten für Ink-Jet" in farbe + lack, Heft 7, 1987, Seiten 550 bis 553.

Für das Ink-Jet-Aufzeichnungsverfahren geeignete Tinten werden z.B. in der JP-B-8361/1975, 40484/1976, 13126/1977, 13127/1977 und in der JP-A-95 008/1975 beschrieben. Die in der genannten Literatur beschriebenen Tinten enthalten verschiedene Farbstoffe und/oder Pigmente, die in wäßrigen oder nichtwäßrigen Lösungsmitteln gelöst oder dispergiert sind. Für Ink-Jet-Tinten sind folgende Eigenschaften wünschenswert:

(1) Anpassung der Flüssigkeitseigenschaften (Viskosität, Oberflächenspannung, Leitfähigkeit und dergleichen) an die Strahlerzeugungsbedingungen (Betätigungsspannung des piezoelektrischen Bauelementes, Betätigungsfrequenz, Form und Qualität des Strahldüsenmaterials, Durchmesser der Strahldüse und dergleichen);

(2) kein Zusetzen der feinen Düse und benutzter Kapillaren wegen guter Langzeitlagerungseigenschaften;

(3) rasche Fixierung auf dem Aufzeichnungsmaterial (Papier, Film und dergleichen) bei keinem bis geringem Auslaufen des durch die Tröpfchen erzeugten Aufzeichnungsflecks;

(4) scharfe Kontur der Aufzeichnung bei hoher optischer Dichte;

(5) gute Wasserbeständigkeit und Lichtechtheit der Aufzeichnung;

(6) keine Korrosion an den mit der Tinte in Berührung gelangenden Materialien (Gefäße, Verbindungsleitungen, Abdichtmaterialien usw.);

(7) Die Tinte soll weder schlecht riechen, noch toxisch, noch entflammbar sein.

Dem Fachmann ist bekannt, daß es schwierig ist, die vorstehenden Bedingungen gleichzeitig zu erfüllen.

Aufgabe der Erfindung war es, Tinten für Ink-Jet-Aufzeichnungsverfahren bereitzustellen, die auf Aufzeichnungsmaterialien Aufzeichnungen liefern, die wasserfest sind und die bei Einwirkung von Text-Markern nur gering bis nicht verschmieren.

Die Erfindung betrifft Tinten für Ink-Jet-Aufzeichnungsverfahren, die kationische Farbstoffe und ein mit Wasser mischbares organisches Lösungsmittel enthalten und dadurch gekennzeichnet sind, daß diese

a) mindestens einen Farbstoff der allgemeinen Formel (I)

$$Fa\text{-}(\text{-}X)_n \quad (I)$$

enthalten, in der

X für

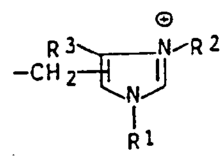 $A^{\ominus}$ ,

worin

$R^1$ und $R^2$ unabhängig voneinander Wasserstoff, Methyl oder 2-Hydroxyethyl,

$R^3$ Wasserstoff oder Methyl und

$A^{\ominus}$ ein Anion bedeuten, und

Fa für einen n-wertigen Rest eines Monoazo-, Disazo- oder Polyazofarbstoffs, eines Chinophthalons, eines Bisdioxazins, eines 2,7-Diphenylxanthenfarbstoffs oder Kupferphthalocyanins und

n für 1,2,3 oder 4 stehen oder, wenn n = 1 und Fa der Rest eines Chinophthalons oder eines 2,7-Diphenylxanthenfarbstoffs ist, kann X auch für

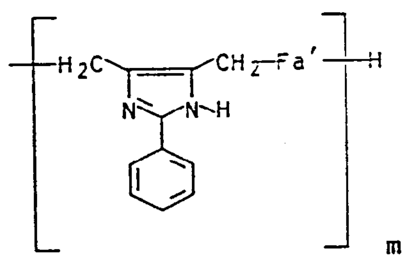

stehen, worin Fa' ein zweiwertiger Rest eines Chinophthalon- oder eines 2,7-Diphenylxanthenfarbstoffs und m eine ganze Zahl ≧1 bedeuten, oder, wenn Fa für den Rest eines Kupferphthalocyanins oder eines 2,7-Diphenylxanthens steht, kann X auch für

$$-CH_2\text{-}NH\text{-}CO\text{-}(CH_2)_z\text{-}Y$$

stehen, worin

Y 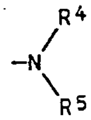 oder 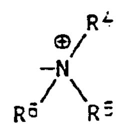 $A^{\ominus}$ ,

$R^4$ und $R^5$ unabhängig voneinander $C_1$-$C_6$-Alkyl, Hydroxyethyl, Hydroxypropyl oder Cyclohexyl oder

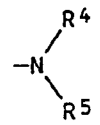

Piperidinyl, Pyrrolidinyl oder Morpholinyl und
and $R^6$ Methyl, Ethyl oder Hydroxyethyl oder

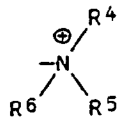

Pyridinium oder Picolinium
und z 1 oder 2 bedeuten oder

b) ein Isomerengemisch von Farbstoffen der Formel (I), worin X für $-CH_2-NH_2$ steht.

Die bisher in solchen Tinten verwendeten kationischen Farbstoffe, z.B. Kristallviolett, Malachitgrün haben den Nachteil, daß die damit erhaltenen Aufzeichnungen bei Einwirkung von Text-Markern verschmieren.

Die Reste Fa leiten sich ab von Monoazo-, Disazo- Polyazofarbstoffen, vom Chinophthalon, von Bisdioxazinen, von 2,7-Diphenylxanthenfarbstoffen oder von Kupferphthalocyaninen.

Die Farbstoffe der Formel (I) sind bekannt, z. B. aus den DE-A-30 44 563, 31 11 199, 30 06 013, 31 33 391, 31 11 200,. 28 10 246 und 27 35 488.

Als Anionen kommen solche in Betracht, die den Salzen gute Löslichkeit in den Lösungsmitteln oder Lösungsmittelgemischen verleihen.

Anionen $A^{\ominus}$ leiten sich von anorganischen oder organischen Säuren ab und sind z. B. Fluorid, Chlorid, Bromid, Hydrogensulfat, Sulfat, Aminosulfat, Methosulfat, Ethosulfat, Perchlorat, Tetrafluoroborat, Trichlorozinkat, Methansulfonat, Benzolsulfonat, p-Toluolsulfonat, $C_2$-$C_{20}$-Alkylbenzolsulfonat, Formiat, Acetat, Propionat, Lactat, Benzoat, Oxalat oder Succinat oder Gemische dieser Anionen.

Die erfindungsgemäße Ink-Jet-Tinte enthält mindestens einen Farbstoff der Formel (I) und mindestens ein mit Wasser mischbares organisches Lösungsmittel. Der Farbstoff (I) liegt in der Regel in Form des Gemisches isomerer Farbstoffe vor.

Mit Wasser mischbare organische Lösungsmittel sind z. B. $C_1$-$C_4$-Alkanole, wie Methanol, Ethanol, Propanol, Isopropanol, Butanol, Isobutanol, sec-Butanol oder tert-Butanol, aliphatische Carbonsäureamide, wie N,N-Dimethylformamid oder N,N-Dimethylacetamid, Lactame, wie N-Methylpyrrolidin-2-on, cyclische Harnstoffe, wie 1,3-Dimethylimidazolidin-2-on, Ketone oder Ketoalkohole mit 3 bis 10 C-Atomen, wie Aceton, Methylethylketon oder 2-Methyl-2-hydroxypentan-4-on, Ether, wie Tetrahydrofuran oder Dioxan, Mono-, Di- oder Polyalkylenglykole oder -thioglykole, die $C_2$-$C_6$-Alkyleneinheiten aufweisen, wie Ethylenglykol, 1,2- oder 1,3-Propylenglykol, 1,2- oder 1,4-Butylenglykol, 1,6-Hexylenglykol, Diethylenglykol, Triethylenglykol, Thiodiglykol, Polyethylenglykol oder Polypropylenglykol, andere Polyole, wie Glycerin oder Hexan-1,2,6-triol, $C_1$-$C_4$-Alkylether von mehrwertigen Alkoholen, wie Ethylenglykolmonomethyl- oder -monoethylether, Diethylenglykolmonomethyl-oder -monoethylether oder Triethylenglykolmonomethyl- oder -monoethylether oder Dimethylsulfoxid.

Als mit Wasser mischbare organische Lösungsmittel, sind z.B. bevorzugt: N-Methylpyrrolidin-2-on, Mono-, Di- oder Trialkylenglykole, die $C_2$-$C_6$-Alkyleneinheiten aufweisen, insbesondere Mono-, Di- und Triethylenglykol und Dimethylsulfoxid oder Gemische davon. Ganz besonders hervorzuheben sind N-Methylpyrrolidin-2-on, Diethylenglykol und/oder Dimethylsulfoxid.

Der Anteil des Farbstoffs der Formel I liegt bei 2 bis 10 Gew.%, vorzugsweise 3 bis 5 Gew.%, jeweils bezogen auf das Gesamtgewicht der Aufzeichnungsflüssigkeit.

Bevorzugt ist eine Aufzeichnungsflüssigkeit, die neben dem Farbstoff der Formel (I) und einem mit Wasser mischbaren organischen Lösungsmittel zusätzlich noch Wasser enthält.

In diesem Fall enthält die erfindungsgemäße Aufzeichnungsflüssigkeit für das Ink-Jet-Verfahren im allgemeinen 50 bis 95 Gew.%, vorzugsweise 70 bis 95 Gew.%, jeweils bezogen auf das Gesamtgewicht des Lösungsmittelsystems, an Wasser.

Die neue Aufzeichnungsflüssigkeit kann weiterhin Hilfsmittel, z.B. Mittel zur Beeinflussung der Viskosität, wie Polyvinylchlorid oder Cellulosederivate, Tenside (nichtionisch, anionisch oder kationisch) oder Puffersysteme enthalten.

Die folgenden Beispiele sollen die Erfindung näher erläutern.

Allgemeine Herstellvorschrift für eine Aufzeichnungsflüssigkeit

3 bis 5 Gew.-Teile eines Farbstoffs, der nach dem Verfahren der umgekehrten Osmose von Elektrolyten befreit worden ist, werden in 95 bis 97 Gew.-Teilen einer Flüssigkeit gelöst, deren Zusammensetzung in den nachfolgenden Beispielen angegeben ist. Die Lösung wird unter Druck durch ein Teflon-Filter der Porengröße 1 μm filtriert und danach unter vermindertem Druck entgast.

Mit dieser Aufzeichnungsflüssigkeit wird das Aufnahmegefäß eines Tintenstrahl-Druckkopfes gefüllt, der unter dem Einfluß von zugeführter Wärme die Tinte tröpfchenförmig ausstößt. Mit diesem Thermo-Ink-Jet-Druckkopf wird ein handelsübliches Papier, wie es für Maschinenschriften verwendet wird, bedruckt.

Die Abriebechtheit des erhaltenen Schriftbildes wird nach zwei Methoden geprüft:

Methode 1

Überstreichen der Schrift mit einem handelsüblichen Textmarker

Methode 2

Reiben einer beschriebenen Stelle mit einem angefeuchteten Finger

Die Echtheit des Schriftbildes wird mit Noten von 5 bis 1 bewertet. Dabei bedeutet Note 5, daß kein Ausbluten erfolgt, und Note 1, daß das Schriftbild so stark verschmiert, daß es nicht mehr erkennbar ist.

Für die Herstellung der Tinten wurden die in der Tabelle 1 angegebenen Farbstoffe der Formel

$$Fa\text{-}(X)_n$$

verwendet.

Tabelle 1

| Farbstoff Nr. | Fa aus der Gruppe | X aus der Gruppe | beschrieben in DE-A- | Beispiel |
|---|---|---|---|---|
| 1 | Chinophthalon | Imidazolylmethyl | 30 44 563 | 72 |
| 2 | Chinophthalon | Imidazolylmethyl | 30 44 563 | 71 |
| 3 | Azo | Imidazolylmethyl | 30 44 563 | 64 |
| 4 | Azo | Imidazolylmethyl | 30 44 563 | 65 |
| 5 | Azo | Imidazolylmethyl | 30 44 563 | 66 |
| 6 | Triphendioxazin | Imidazolylmethyl | 30 44 563 | 75 |
| 7 | Xanthen | Imidazolylmethyl | 30 44 563 | 88 |
| 8 | Xanthen | Imidazolylmethyl | 31 33 391 | 1 (Oligomer) |
| 9 | Xanthen | Imidazolylmethyl | 31 33 391 | 3 (Oligomer) |
| 10 | Chinophthalon | Imidazolylmethyl | 31 33 391 | 6 |
| 11 | Cu-Phthalocyanin | Imidazolylmethyl | 30 06 013 | 2 |
| 12 | Chinophthalon | Imidazolylmethyl | 30 06 013 | 4 |
| 13 | Azo | Aminomethyl | 28 10 246 | 47 |
| 14 | Azo | Aminomethyl | 28 10 246 | 27 |
| 15 | Cu-Phthalocyanin | Aminomethyl | 27 35 485 | |
| 16 | Xanthen | Pyrrolidinopropionamidomethyl | 31 11 200 | 25 |
| 17 | Cu-Phthalocyanin | Dibutylaminoacetamidomethyl | 31 11 199 | 9 |

Die Zusammensetzung der Tinten sowie die Bewertung der Abriebechtheit der mit der Tinte erhaltenen Aufzeichnung ist in der Tabelle 2 zusammengestellt.

Tabelle 2

| Tinte (Beispiel) | Farbstoff Nr. | Farbstoff in Aufzeichnungs-flüsigkeit [Gew.%] | Lösungsmittelsystem [Gew.-Teile] | Farbe | Echtheit nach Methode 1 | Echtheit nach Methode 2 |
|---|---|---|---|---|---|---|
| 1 | 1 | 3,5 | W:DEG:NMP = 6:3:1 | gelb | 5 | 5 |
| 2 | 2 | 3,5 | W:DEG:NMP = 7:2:1 | gelb | 4-5 | 5 |
| 3 | 3 | 5 | W:DEG:NMP = 6:3:1 | gelb | 4-5 | 4 |
| 4 | 4 | 4 | W:DEG = 9:1 | rot | 4-5 | 4-5 |
| 5 | 5 | 3,5 | W:DEG = 8:2 | orange | 4 | 4-5 |
| 6 | 6 | 4,5 | W:DEG = 1:2 | violett | 5 | 4 |
| 7 | 7 | 3,0 | W:DEG = 9:1 | rot | 3-4 | 4 |
| 8 | 8 | 3,5 | W:DEG = 9:1 | rot | 5 | 4-5 |
| 9 | 9 | 3,5 | W:DEG = 9:1 | rot | 5 | 5 |
| 10 | 10 | 4 | W:DEG:NMP = 7:2:1 | gelb | 4-5 | 5 |
| 11 | 11 | 3,5 | W:DEG:NMP = 8:1:1 | blau | 4-5 | 4-5 |
| 12 | 12 | 3,5 | W:DEG = 9:1 | blau | 5 | 4-5 |
| 13 | 13 | 3,5 | W:DEG = 9:1 | gelb | 4 | 3-4 |
| 14 | 14 | 4,5 | W:DEG:NMP = 6:3:1 | rot | 4-5 | 4-5 |
| 15 | 15 | 4 | W:DEG:NMP = 7:1:2 | blau | 5 | 5 |
| 16 | 16 | 4,0 | W:DEG:NMP = 6:3:1 | rot | 4 | 4-5 |
| 17 | 17 | 3,5 | W:DEG:NMP = 7:2:1 | blau | 4-5 | 5 |

W = Wasser
DEG = Diethylenglykol
NMP = N-Methylpyrrolidon

**Patentansprüche**

1. Tinten für Ink-Jet-Aufzeichnungsverfahren, enthaltend kationische Farbstoffe und ein mit Wasser mischbares organisches Lösungsmittel, dadurch gekennzeichnet, daß diese
   a) mindestens einen Farbstoff der allgemeinen Formel (I)

   $$Fa\text{-}(\text{-}X)_n \quad (I)$$

   enthalten, in der
   X für

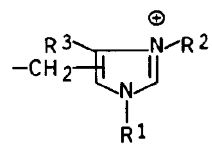

$A^{\ominus}$ ,

worin
$R^1$ und $R^2$ unabhängig voneinander Wasserstoff, Methyl oder 2-Hydroxyethyl,
$R^3$ Wasserstoff oder Methyl und
$A^{\ominus}$ ein Anion bedeuten, und
Fa für einen n-wertigen Rest eines Monoazo-, Disazo- oder Polyazofarbstoffs, eines Chinophthalons, eines Bisdioxazins, eines 2,7-Diphenylxanthenfarbstoffs oder Kupferphthalocyanins und
n für 1, 2, 3 oder 4 stehen oder,
wenn n = 1 und Fa der Rest eines Chinophthalons oder eines 2,7-Diphenylxanthenfarbstoffs ist, kann X auch für

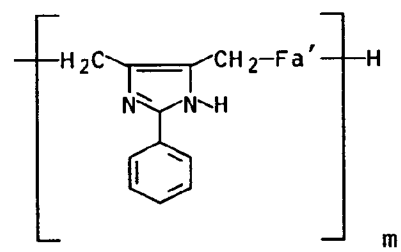

stehen, worin Fa′ ein zweiwertiger Rest eines Chinophthalon- oder eines 2,7-Diphenylxanthenfarbstoffs und m eine ganze Zahl ≧1 bedeuten, oder, wenn Fa für den Rest eines Kupferphthalocyanins oder eines 2,7-Diphenylxanthens steht, kann X auch für

$$-CH_2\text{-}NH\text{-}CO\text{-}(CH_2)_z\text{-}Y$$

stehen, worin

Y 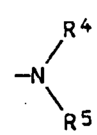 oder 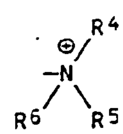 $A^{\ominus}$ ,

$R^4$ und $R^5$ unabhängig voneinander $C_1$-$C_6$-Alkyl, Hydroxyethyl, Hydroxypropyl oder Cyclohexyl oder

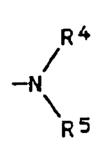

Piperidinyl, Pyrrolidinyl oder Morpholinyl und
$R^6$ Methyl, Ethyl oder Hydroxyethyl oder

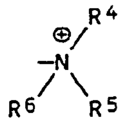

Pyridinium oder Picolinium
und z 1 oder 2 bedeuten, oder

b) ein Isomerengemisch von Farbstoffen der Formel (I) enthalten, worin X für $-CH_2-NH_2$ steht.

## Claims

**1.** An ink for ink jet recording comprising cationic dyes and a water-miscible organic solvent, wherein said ink contains

a) one or more dyes of the general formula (I)

$$Fa-(-X)_n \quad (I)$$

where

X is

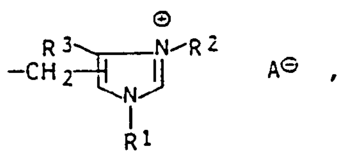

where

$R^1$ and $R^2$ are each independently of the other hydrogen, methyl or 2-hydroxyethyl,
$R^3$ is hydrogen or methyl and
$A^\ominus$ is an anion, and
Fa is an n-valent radical of a monoazo, disazo or polyazo dye, of a quinophthalone, of a bisdioxazine, of a 2,7-diphenylxanthene dye or of a copper phthalocyanine and n is 1, 2, 3 or 4, or, when n is 1 and Fa is the radical of a quinophthalone or of a 2,7-dipheny1xanthene dye, X may also be

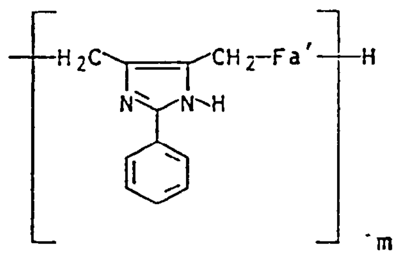

where Fa' is a divalent radical of a quinophthalone or of a 2,7-dipheny1xanthene dye and m is an integer ≥1, or, when Fa is the radical of a copper phthalocyanine or of a 2,7-dipheny1xanthene, X may also be

$$-CH_2-NH-CO-(CH_2)_z-Y$$

where
Y is

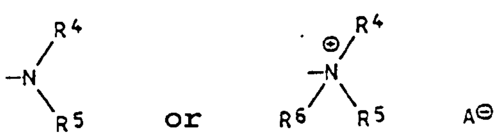

$R^4$ and $R^5$ are each independently of the other $C_1$-$C_6$-alkyl, hydroxyethyl, hydroxypropyl or cyclohexyl or and

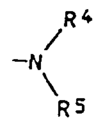

is piperidinyl,pyrrolidinyl or morpholinyl and $R^6$ is methyl, ethyl or hydroxyethyl or

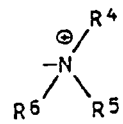

is pyridinium or picolinium and z is 1 or 2, or

b) a mixture of isomers of dyes of the formula (I) where X is $-CH_2-NH_2$.

## Revendications

1. Encres pour procédés d'impression à jet d'encre, contenant des colorants cationiques et un solvant organique miscible à l'eau, caractérisé en ce qu'elles contiennent

   a) au moins un colorant de formule générale (I)

   $$Fa\text{-}(\text{-}X)_n \quad (I)$$

   dans laquelle
   X est mis pour

   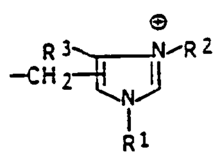
   $A^{\ominus}$ ,

   où
   $R^1$ et $R^2$ représentent chacun, indépendamment l'un de l'autre, un atome d'hydrogène ou un radical méthyle ou 2 - hydroxyéthyle,
   $R^3$ représente un atome d'hydrogène ou un radical méthyle et
   $A^{\ominus}$ représente un anion, et
   Fa est mis pour un reste à n valences d'un colorant monoazoïque, disazoïque ou polyazoïque, d'une quinophtalone, d'une bisdioxazine, d'un colorant 2, 7-diphénylxanthénique ou d'une phtalocyanine de cuivre, et
   n est mis pour 1, 2, 3 ou 4, ou bien
   lorsque n = 1 et Fa est le reste d'une quinophtalone ou d'un colorant 2,7-diphénylxanthénique, X peut aussi autre mis pour

   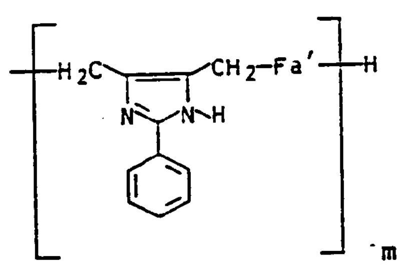

   où Fa′ représente un reste bivalent d'une quinophtalone ou d'un colorant 2,7-diphénylxanthénique et m est un nombre entier ≥1, ou encore,
   lorsque Fa est mis pour le reste d'une phtalocyanine de cuivre ou d'un 2,7-diphénylxanthène, X peut

également être mis pour

$$-CH_2-NH-CO-(CH_2)_Z-Y$$

où Y représente

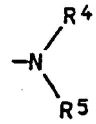

ou

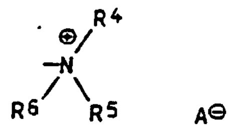

$R^4$ et $R^5$ représentant chacun, indépendamment l'un de l'autre, un radical alkyle en $C_1$-$C_6$, hydroxyéthyle, hydroxypropyle ou cyclohexyle, ou

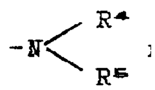

représente un radical pipéridinyle, pyrrolidinyle ou morpholinyle, et
$R^6$ représente un radical éthyle, méthyle ou hydroxyéthyle ou

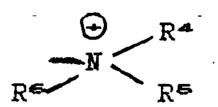

est un cation pyridinium ou picolinium et z est mis pour 1 ou 2, ou
b) un mélange d'isomères de colorants de formule (I), dans laquelle X est mis pour $-CH_2-NH_2$.